# EUROPÄISCHE PATENTANMELDUNG

(11) **EP 0 720 393 A2**
(43) Veröffentlichungstag der Anmeldung: **03.07.1996**
(21) Anmeldenummer: 95119501.5
(22) Anmeldetag: 11.12.1995
(51) Int. Cl.: H04Q 1/14

(54) **Kommunikationssystem**

(30) Priorität: 27.12.1994 DE 4446812
(71) Anmelder: SIEMENS AKTIENGESELLSCHAFT, D-80333 München (DE)
(72) Erfinder: Zell, Karl, Dipl.Ing., D-82343 Niederpöcking (DE)

(57) **Zusammenfassung**

Die Erfindung betrifft ein Kommunikationssystem, bestehend aus einem Vermittlungssystem und einem mit diesem über interne Anschlußleitungen verbundenen Hauptverteiler für den Anschluß der Teilnehmernetzleitungen.

Um die internen Anschlußkabel zwischen dem Vermittlungssystem und der Hauptverteiler-Internseite zu eliminieren, ist die Rückwandverdrahtungsplatte (5) des Vermittlungssystems (1) auf einer Seite verlängert, und auf die verlängerte Rückwandverdrahtungsplatte (5) sind die Anschlußleisten der Hauptverteiler-Internseite (2) mit ihren vermittlungsseitigen Anschlüssen direkt in die Rückwandverdrahtungsplatte (5) eingepreßt.

## Beschreibung

Die vorliegende Erfindung betrifft ein Kommunikationssystem, bestehend aus einem Vermittlungssystem und einem mit diesem über interne Anschlußleitungen verbundenen Hauptverteiler für den Anschluß der Teilnehmernetzleitungen.

Bisher werden Kommunikationssysteme getrennt aus einem Vermittlungssystem und einem Hauptverteiler aufgebaut. Hierbei sind jeweils separate, räumlich getrennte Gehäusekonstruktionen als Stand- und/oder Wandversionen ausgeführt. Die elektrische Verbindung untereinander erfolgt durch eine Vielzahl von geschirmten und kostenaufwendigen HVT-Steckkabeln, die in speziellen Kabelkanälen verlegt werden müssen. Der Platzbedarf und der Montageaufwand auf dem Boden bzw. an der Wand ist erheblich, ebenso die damit gekoppelte spezifische Längenfestlegung der Steckkabel (Fertigungs-, Montage-/Service-Logistik, Aufwendungen, Verpackungen usw.)

Derzeit werden Vermittlungssysteme in Gehäuse bzw. Schrankkonstruktionen untergebracht. Auf der Rückseite der Rückwandverdrahtungsplatte, bzw. auf der Vorderseite der Baugruppen werden die Teilnehmerleitungen über Kabelstecker und Kabel zu einem extern angeordneten Hauptverteiler (HVT) in einer separaten Gehäusekonstruktion geführt. Aus elektrischen Gründen (EMV) kommen meist geschirmte Steckkabel zum Einsatz, deren Schirm beim Austritt bzw. Eintritt in das zu schirmende Gehäuse manuell freigelegt und dann elektrisch leitend mit diesem Gehäuse verbunden werden muß. Auf der internen Seite des Hauptverteilers werden Teilnehmerleitungen auf die Anschlußklemmen von Verteilerleisten aufgelegt und elektrisch kontaktiert. Im Kabelstecker und an den Verteilerleisten muß der Kabelmantel abisoliert werden, die Adernbündel freigelegt und die Einzeladern abisoliert und angeschlossen werden. Diese Fertigungs- und Montageprozesse sind besonders kostenintensiv.

Die Aufgabe der vorliegenden Erfindung besteht daher darin, ein Kommunikationssystem der eingangs genannten Art anzugeben, welches sich bezüglich der Aufwendungen für die Verkabelung der Baueinheiten untereinander einfacher und billiger fertigen und montieren läßt.

Diese Aufgabe wird für ein Kommunikationssystem der eingangs genannten Art dadurch gelöst, daß die Rückwandverdrahtungsplatte des Vermittlungssystems auf einer Seite verlängert ist, und daß auf die verlängerte Rückwandverdrahtungsplatte die Anschlußleisten der Hauptverteiler-Internseite mit ihren vermittlungsseitigen Anschlüssen direkt in die Rückwandverdrahtungsplatte eingepreßt sind.

Bei dem erfindungsgemäßen Kommunikationssystem bildet das Vermittlungssystem mit dem Hauptverteiler eine Einheit, bzw. es ist aus konstruktiver Sicht Bestandteil der Internseite des Verteilers. Damit lassen sich bei dem Kommunikationssystem gemäß der vorgegebenen Erfindung die internen Steckkabel zwischen dem Vermittlungssystem und der Hauptverteiler-Internseite eliminieren.

Gemäß einer Ausgestaltung der Erfindung ist die Rückwandverdrahtungsplatte nach unten hin einstückig verlängert und in diesem verlängerten Bereich werden gut zugänglich die Anschlußleisten der Hauptverteiler-Internseite mit ihren Anschlußklemmen direkt in die Rückwandverdrahtungsplatte eingepreßt. Auf diese Weise ergibt sich ein besonders einfacher und kostengünstiger Aufbau des Kommunikationssystems.

Eine andere Ausgestaltung des erfindungsgemäßen Kommunikationssystems ist dadurch gekennzeichnet, daß der verlängerte Teil der Rückwandverdrahtungsplatte separat angesetzt ist und mit Einpreßmessern direkt mit der eigentlichen Rückwandverdrahtungsplatte verbunden ist. Auf diese Weise ist ein vorheriger getrennter Aufbau des Vermittungssystems und der Hauptverteiler-Internseite möglich.

Um eine nachträgliche Veränderung der Verlängerung der Rückwandverdrahtungsplatte vornehmen zu können, ist eine andere Weiterbildung des erfindungsgemäßen Kommunikationssystems dadurch gekennzeichnet, daß die Rückwandverdrahtungsplatte aus zwei Teilrückwandverdrahtungsplatten besteht, die über einen Steckverbinder miteinander verbunden sind. Hierdurch wird eine große Freizügigkeit ermöglicht, die noch dadurch vergrößert werden kann, daß unterschiedliche Steckverbindertypen verwendet werden können.

Nachfolgend wird anhand einer Figur ein Ausführungsbeispiel eines Kommunikationssystems gemäß der vorliegenden Erfindung beschrieben.

Es zeigen:

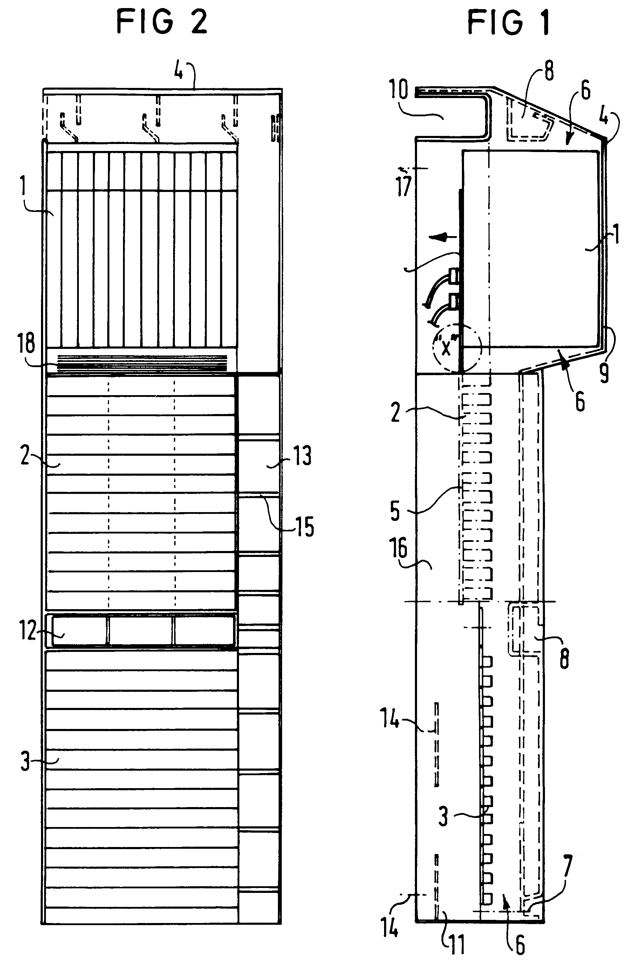

- FIG 1: einen Längsschnitt durch ein Ausführungsbeispiel eines Kommunikationssystems gemäß der vorliegenden Erfindung,
- FIG 2: eine Draufsicht auf die einzelnen Baugruppen und Bauteile des in Figur 1 dargestellten Kommunikationssystems,
- FIG 3 - 6: verschiedene Anschlußmöglichkeiten der Verlängerung der Rückwandverdrahtungsplatte an die eigentliche Systemrückwandverdrahtungsplatte.

Das erfindungsgemäße Kommunikationssystem besteht im wesentlichen aus drei Einheiten, nämlich dem eigentlichen Vermittlungssystem 1, der Hauptverteiler-Internseite 2 und der Hauptverteiler-Externseite 3, welche räumlich untereinander angeordnet sind. Bei der Kommunikationsanlage gemäß der vorliegenden Erfindung ist das Vermittlunssystem 1 und die Hauptverteiler-Internseite 2 über eine Rückwandverdrahtungsplatte 5 miteinander verbunden.

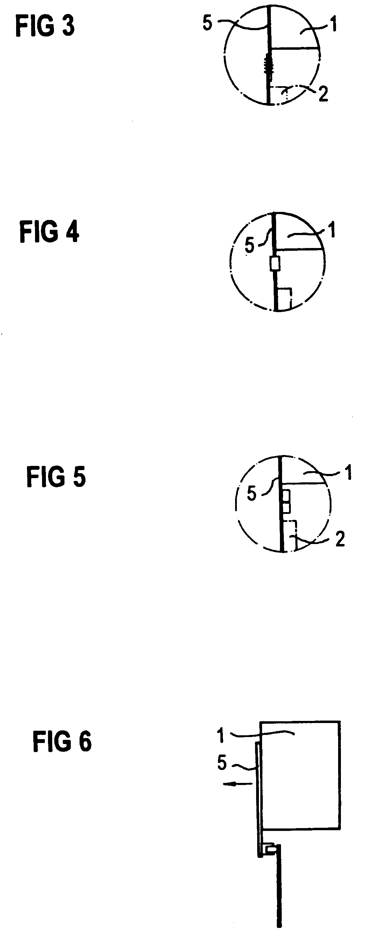

Diese Rückwandverdrahtungsplatte dient zur Verdrahtung der Baugruppen des Vermittlungssystems untereinander so wie zur Verbindung des Vermittlungssystems mit den vermittlungsseitigen Anschlüssen der HVT-Internseite 2. Diese Rückwandverdrahtungsplatte mit ihrer Verlängerung kann einstückig ausgebildet sein. Es ist aber auch möglich, das verlängerte Teil der Rückwandverdrahtungsplatte an die eigentliche Systemrückwandverdrahtungsplatte separat anzusetzen. Dies kann, wie in Figur 3 dargestellt ist, direkt mittels Einpreßmessern in Multiboard-Technik geschehen oder wie Figur 4 zeigt, mittels eines Direktsteckers oder es kann, wie in Figur 5 angedeutet ist, über eine Steckverbindung erfolgen. In Figur 6 ist gezeigt, daß die Verbindung der eigentlichen Systemrückwandverdrahtungsplatte mit der Verlängerung über Stecker unterschiedlicher Art, d.h. über Stecker von verschiedenen Herstellern erfolgen kann.

Bei dem erfindungsgemäßen Kommunikationssystem ist also das Vermittlungssystem in die Hauptverteiler-Internseite integriert, bzw. es ist aus konstruktiver Sicht Bestandteil der Hauptverteiler-Internseite. Dadurch lassen sich die internen Steckkabel zwischen dem Vermittlungsystem und dem Hauptverteiler eliminieren.

Unterhalb der HVT-Internseite 2 ist, getrennt durch einen Träger 12 für Sondereinbauten, die HVT-Externseite 3 angeordnet. Unterhalb der HVT-Externseite 3 erfolgt der Kabeleintritt 11 des Leitungsnetzes, wobei die einzelnen Kabel auf die Stege 14 für das Leitungsnetz geführt sind. An den Stegen 14 erfolgt auch die Schirmkontaktierung. Die Rangierung zwischen der HVT-Internseite 2 und der HVT-Externseite 3 erfolgt mittels Rangierkabel, welche durch den rechten Rangierkanal 13 und durch fädelfreie Rangierhaken 15 geführt sind.

Das ganze Kommunikationssystem ist an einem Rahmen 16 befestigt, welcher wiederum mit Wandbefestigungen 17 an einer Wand befestigt ist.

Das eigentliche Vermittlungssystem kann durch eine perforierte Kunststoff- oder Blechverkleidung 4 mit einer eventuell erforderlichen Schirmfunktion sowie aus Gründen der Abführung der elektrischen Verlustleistung gekapselt werden. Durchlaufende Griffschalen 8 sind zur Optimierung der Montage- und Servicebedingungen vorgesehen. Zusätzlich kann das ganze Kommunikationssystem durch ein Schloß 7 gegen unbefugte Eingriffe geschützt werden.

## Patentansprüche

1. Kommunikationssystem, bestehend aus einem Vermittlungssystem und einem mit diesem über interne Anschlußleitungen verbundenen Hauptverteiler für den Anschluß der Teilnehmernetzleitungen,
**dadurch gekennzeichnet,**
daß die Rückwandverdrahtungsplatte (5) des Vermittlungssystems (1) auf einer Seite verlängert ist, und daß auf die verlängerte Rückwandverdrahtungsplatte (5) die Anschlußleisten der Hauptverteiler-Internseite (2) mit ihren vermittlungsseitigen Anschlüssen direkt in die Rückwandverdrahtungsplatte (5) eingepreßt sind.

2. Kommunikationssystem nach Anspruch 1,
**dadurch gekennzeichnet,**
daß die Rückwandverdrahtungsplatte (5) einstückig ausgebildet ist.

3. Kommunikationssystem nach Anspruch 1,
**dadurch gekennzeichnet,**
daß der verlängerte Teil der Rückwandverdrahtungsplatte (5) separat angesetzt ist und mit Einpreßmessern direkt mit der eigentlichen Systemrückwandverdrahtungsplatte (5) verbunden ist.

4. Kommunikationssystem nach Anspruch 1,
**dadurch gekennzeichnet,**
daß die Rückwandverdrahtungsplatte (5) aus zwei Teilrückwandverdrahtungsplatten besteht, die über einen Steckverbinder miteinander verbunden sind.
